(19) Europäisches Patentamt

European Patent Office

Office européen des brevets

(11) Veröffentlichungsnummer: **0 273 358**
**A2**

(12) # EUROPÄISCHE PATENTANMELDUNG

(21) Anmeldenummer: **87119022.9**

(51) Int. Cl.⁴: **G01L 19/12**

(22) Anmeldetag: **22.12.87**

(30) Priorität: **02.01.87 DE 8700022 U**

(43) Veröffentlichungstag der Anmeldung:
**06.07.88 Patentblatt 88/27**

(84) Benannte Vertragsstaaten:
**DE FR GB IT NL**

(71) Anmelder: **Walter Stauffenberg KG**
**Im Ehrenfeld 4**
**D-5980 Werdohl(DE)**

(72) Erfinder: **Schauerte, Frank, Ingenieur**
**Elsetalstr. 14**
**D-5974 Herscheid(DE)**
Erfinder: **Schumacher, Johannes, Ingenieur**
**Klosterweg 27**
**D-5980 Werdohl(DE)**

(74) Vertreter: **Gralfs, Harro, Dipl.-Ing.**
**Am Bürgerpark 8**
**D-3300 Braunschweig(DE)**

(54) **Differenzdruck-Grenzwertanzeiger.**

(57) Differenzdruck-Grenzwertanzeiger mit einem Gehäuse (2) mit zwei entgegengesetzt gerichteten Sackbohrungen (22,24), die durch eine dünne Wand (26) getrennt sind. In der einen Sackbohrung (22) ist ein mit dem Differenzdruck beaufschlagter federbelasteter Betätigungskolben (28) und in der anderen Sackbohrung (24) ein federbelasteter Anzeigekolben (52) axial beweglich geführt. Beide Kolben (28,52) tragen an ihrem der Wand (26) zugewandten Ende Permanentmagneten (32,56;132,156), deren Polarität gleich oder entgegengesetzt gerichtet ist. Über die Magnetkraft ist der Anzeigekolben (52;152) bei einer Verstellung des Betätigungskolbens entgegen der auf den Anzeigekolben wirkenden Federkraft (66;166) verstellbar. Der Anzeigekolben (52) ist als Ringkolben (54) mit einem am äußeren Ende eingesetzten Stirndeckel (58) ausgebildet. Er trägt im Abstand vom äußeren Ende einen Kragen (62), mit dem er in der Sackbohrung (24) geführt ist. In der Verbindung, die von außen zu dem mit hohem Druck beaufschlagten Ende (35) des Betätigungskolbens (28) führt, ist eine Drosselstrecke vorgesehen. Als Sperre für den Anzeigekolben, die beim Absinken der Temperatur wirksam wird, ist ein geschlitzter Bimetallring (68) mit rechteckigem Querschnitt vorgesehen, der sich bei Erwärmung zusammenzieht und am Anzeigekolben (52) auf dem Umfang seines Kragens (62) in einer flachen Ringnut (70) axial geführt angeordnet ist. Das den Anzeigekolben enthaltende Gehäuseende ist außen mit Ringnuten (18,20) zur Aufnahme eines Sprengringes (92) bzw. eines elastischen O-Ringes (94) versehen, die zur Halterung eines auf das Gehäuse aufsteckbaren Schaltergehäuses (81) dienen. Der Schaltstößel (96) eines hierin angeordneten Schalters ist durch den Deckel (58) des Anzeigekolbens (52) betätigbar, wobei das Schaltergehäuse mit seinem Kabelausgang (80) in beliebige Stellungen relativ zu dem Gehäuse (2) des Grenzwertanzeigers verdrehbar ist.

Fig.1

## DIFFERENZDRUCK-GRENZWERTANZEIGER

Die Erfindung bezieht sich auf einen Differenzdruck-Grenzwertanzeiger nach dem Oberbegriff des Anspruches 1.

Differenzdruck-Grenzwertanzeiger dieser Art werden beispielsweise als Verschmutzungsanzeiger für Filter verwendet und mit ihrem patronenähnlichen Schraubgehäuse in das Filtergehäuse eingesetzt. Sie reagieren in Abhängigkeit vom Differenzdruck über den Filterkörper. Das Überschreiten des im allgemeinen zwischen 1 und 5 bar wählbaren Differenzdruckes wird mechanisch oder elektrisch angezeigt.

Der Grenzwert wird mechanisch dadurch angezeigt, daß der Anzeigekolben über den abschließenden Ringdeckel vorspringt. Dieser Anzeigekolben ist normalerweise mit einer Signalfarbe, normalerweise Rot, gefärbt. Aufgrund der notwendigen Abstimmung zwischen der Kraft der Feder, die den Anzeigekolben belastet, und den dieser Feder entgegenwirkenden Magnetkräften ist es notwendig, den Anzeigekolben mit einer möglichst kleinen Masse auszugestalten. Es werden daher normalerweise Anzeigestifte geringen Durchmessers verwendet. Um eine deutliche Anzeige mittels der eingefärbten Anzeigestifte zu erreichen, ist es notwendig, einen relativ großen Hub vorzusehen. Normalerweise wird ein Hub von 6 bis 8 mm gewählt, d.h. um dieses Maß springt der Anzeigestift beim Auslösen über den ihn führenden Ringdeckel vor. Ein großer Hub erschwert aber die sichere Korrespondenz zwischen den Magnet-und Federkräften.

Aufgabe der Erfindung ist es, einen Differenzdruck-Grenzwertanzeiger derart auszugestalten, daß ohne wesentliche Vergrößerung der Masse des Anzeigekolbens eine wesentlich klarere Signalgabe erreicht wird.

Diese Aufgabe wird gelöst durch einen Differenzdruck-Grenzwertanzeiger mit den Merkmalen des Anspruches 1.

Die erfindungsgemäße Ausbildung des Anzeigekolbens hat den weiteren Vorteil, daß die Betätigung üblicher Mikroschalter mittels des Anzeigekolbens auch möglich ist bei koaxialer Anordnung eines den Schalter enthaltenden Abgangsgehäuses.

Zweckmäßige Ausführungen sind Gegenstand der abhängigen Ansprüche.

Ein weiteres Problem besteht darin, daß der Differenzdruck sich außer in Abhängigkeit von der Durchflußmenge und dem Verschmutzungsgrad des Filterkörpers auch in Abhängigkeit von der Viskosität der zu filternden Flüssigkeit ändert. Wesentliche Viskositätsabweichungen können beim Anfahren einer kalten Hydraulikanlage vorliegen.

Die höhere Viskosität bei Betriebsbeginn erzeugt dabei vielfach einen viskositätsbedingten Differenzdruck, der leicht den für den normalen Betrieb vorgesehenen maximalen Differenzdruck überschreiten und zu einer Fehlanzeige führen kann. Um solche Fehlanzeigen bei Betriebsbeginn zu unterdrücken, sind bei niedrigen Temperaturen wirksame Bimetallarretierungen für den Anzeigekolben bekannt. Bekannt ist ein üblicherweise im Gehäuse befestigter biegsamer Bimetallstreifen mit einer Zunge, die bei niedriger Temperatur mit einer Nut oder einer Stufe am Anzeigekolben in Eingriff steht und so verhindert, daß dieser gegen die Federkraft ausweicht. Der Bimetallstreifen ist dabei so ausgelegt, daß er bei Erreichen der Betriebstemperatur außer Eingriff mit dem Anzeigekolben gelangt. Derartige Anzeigesperren haben den Nachteil, daß die Zunge des Bimetallstreifens verbogen werden kann, wenn das Rücksetzen des Anzeigekolbens erst bei niedriger Temperatur erfolgt.

Eine temperaturabhängige Anzeigesperre, bei der Beschädigungen der Sperre nicht möglich sind, ist Gegenstand des abhängigen Anspruches 7.

Die Erfindung ist in der Zeichnung in drei Ausführungsbeispielen veranschaulicht und im nachstehenden im einzelnen anhand der Zeichnung beschrieben. In dieser zeigen:

Fig. 1 und 2 Teillängsschnitte durch einen Differenzdruck-Grenzwertanzeiger mit mechanischer Alarmanzeige in zwei verschiedenen Ausführungen, wobei links der Achsen jeweils Ansichten dargestellt sind.

Fig. 3 einen Differenzdruck-Grenzwertanzeiger mit elektrischer Anzeigebetätigung teilweise im Längsschnitt.

Der in der Zeichnung dargestellte Differenzdruck-Grenzwertanzeiger, im nachstehenden kurz Grenzwertanzeiger genannt, weist ein patronenähnliches Gehäuse 2 aus amagnetischem Werkstoff auf. Dieses Gehäuse weist Schlüsselangriffsflächen 4 auf, unter denen sich auf dem äußeren Umfang eine Nut 6 für einen Dichtungs-O-Ring 7 befindet. Unterhalb dieser Nut ist ein Außengewinde 8 vorgesehen, unterhalb dem wiederum eine Nut 10 angebracht ist. Unterhalb der Nut ist ein Führungsansatz 12 mit einem weiteren Dichtungs-O-Ring 14. Oberhalb der Schlüsselangriffsflächen 4 befindet sich ein Gehäuseansatz 16, der außen im Abstand oberhalb der Schlüsselangriffsflächen mit einer Ringnut 18 und einer weiteren Ringnut 20 im Bereich des oberen Gehäuseendes versehen ist. Mit den beiden O-Ringen ist das Gehäuse abdichtend in eine durch die gestrichelten Linien A und B schematisch angedeutete Zuführleitung zu einem Filterelement einsetzbar, während das untere Ende des Gehäuses mit einem im wesentlichen drucklosen Raum hinter dem Filterelement in Verbindung steht, der sich unterhalb der Linie B befindet.

In dem Gehäuse 2 sind zwei jeweils von den Gehäuseenden ausgehende axiale Sackbohrungen 22, 24 vorgesehen. Die beiden Sackbohrungen 22 und 24 sind jeweils durch einen gemeinsamen Boden 26 geringer Dicke getrennt, der hier im Bereich der Schlüsselangriffsflächen 4 liegt.

In der vom unteren Ende ausgehenden ersten axialen Sackbohrung 22 ist ein Betätigungskolben 28 axial verschiebbar gelagert. Dieser Kolben trägt an seinem dem Boden 26 zugewandten Ende in einer Aufnahmebohrung 30 einen Permanentmagneten 32. Daran schließt sich ein erstes kolbenartiges Führungselement 34 mit einer Labyrinthnut 36 an. Im Abstand unterhalb dieses Führungselementes ist ein weiteres kolbenartiges Führungselement 38 vorgesehen, das gleichfalls mit Labyrinthnuten versehen ist. Zwischen den beiden Führungselementen 34 und 38 befindet sich ein Ringraum 40, in den eine Schrägbohrung 42 mündet, die an ihrem anderen Ende in der Ringnut 10 unterhalb des Gewindes 8 mündet. Auf einem Ansatz 44 des Kolbens 28 ist eine Druckfeder 46 geführt, die an ihrem anderen Ende auf einer Scheibe 48 abgestützt ist, die über einen Sprengring 50 am unteren Ende der ersten Sackbohrung 22 festgelegt ist. Die Feder spannt damit den Betätigungskolben in Richtung auf den Boden 26 vor.

Durch die Schrägbohrung wird der höhere Druck vor dem Filterelement in den Ringraum 40 und über die durch das Spiel zwischen dem Führungselement 34 und dem Durchmesser der Sackbohrung 22 gebildete Drosselstrecke verzögert in den Stirnraum 35 geleitet, so daß beispielsweise Druckspitzen keinen Fehlalarm auslösen. Der Druck hinter dem Filterkörper ist durch die Bohrung 49 der Scheibe 48 unter dem Kolben 28 wirksam. Das Führungselement 38 und der Durchmesser der Sackbohrung 22 bilden eine Labyrinthdichtung zu dem Bereich niedrigen Drucks unterhalb des Betätigungskolbens.

In der zweiten, vom entgegengesetzen Ende des Schraubgehäuses 2 ausgehenden zweiten Sackbohrung 24 ist ein Anzeigekolben 52 axial verschiebbar gelagert. Dieser Anzeigekolben ist als Ringkolben 54 ausgebildet, der an seinem unteren Ende einen mit dem Permanentmagneten 32 zusammenwirkenden Permanentmagneten 56 trägt. Die Polarität der beiden Permanentmagnete 32, 56 ist gleichgerichtet. Am außen liegenden Ende des Ringkolbens 54 ist ein Stirndeckel 58 mit einem zylindrischen Ansatz eingesetzt. Der Deckel 58 übergreift die Stirnseite des Ringkolbens 54 und sein Außendurchmesser ist zweckmäßig geringfügig größer als der Durchmesser des äußeren Endes des Ringkolbens.

Die zweite Sackbohrung 24 ist oben durch einen Ringdeckel 60 abgeschlossen, der beispielsweise eingebördelt ist und mit seiner Innenbohrung eine erste Führung für den Ringkolben 54 bildet. Der Ringkolben 52 weist weiter an seinem dem Boden 26 zugewandtenn Ende einen äußeren Kragen 62 auf, der auf seinem unteren Ende außen mit einem Flansch 64 in der zylindrischen Sackbohrung 24 geführt ist und durch den eine vom unteren Ende des Ringkolbens ausgehende Ringnut 63 begrenzt wird, in der eine Druckfeder 66 angeordnet ist, die sich auf dem Boden 26 abstützt und der Magnetkraft zwischen den beiden Permanentmagneten 32 und 56 entgegenwirkt.

Auf seinem äußeren Umfang ist der Kragen 62 mit einer flachen, rechteckförmigen Nut 68 versehen. Diese Nut dient zur Aufnahme eines Bimetallringes 70. Der Bimetallring ist so ausgebildet, daß er sich bei Erwärmung zusammenzieht, also seinen Durchmesser verkleinert. Dieser Bimetallring ist zwischen den Schultern der Ringnut 68 axial geführt. Er ist dabei weiter so ausgebildet, daß er im expandierten, also im kalten Zustand mit der Wandung der zweiten Sackbohrung 24 kraftschlüssig in Eingriff steht.

Über den Bimetallring ist eine temperaturabhängige Arretierung des Anzeigekolbens und damit Unterdrückung von Fehlanzeigen bei viskositätsabhängigen Differenzdrücken erreicht. Da die Arretierung auf dem Umfang des Bimetallringes ausschließlich durch Reibung erfolgt, kann eine Zerstörung dieser Arretierung nicht auftreten. Der Anzeigekolben kann vielmehr auch bei niedrigen Temperaturen eingedrückt werden. Hierbei braucht nur die Reibung zwischen dem Bimetallring und der zylindrischen Wandung der zweiten Sackbohrung überwunden zu werden.

Der Ringkolben 54 ist auf seinem Umfang zwischen dem eingesetzten Stirndeckel 58 und dem Kragen auf seinem äußeren Umfang mit einer Signalfarbe eingefärbt. Der Stirndeckel ist dagegen ungefärbt bzw. hat beispielsweise die Farbe des Ringdeckels 60. Auf diese Weise wird die Signalfarbe erst sichtbar, wenn der Anzeigekolben aufgrund der Überschreitung eines Grenzwertes herausspringt. Da der Außendurchmesser des Ringkolbens ohne Massevergrößerung größer ausgebildet sein kann als die üblichen Anzeigestifte, wird auf diese Weise bereits bei einem wesentlich geringeren Auswärtshub des Anzeigekolbens eine klare Stellungserkennung möglich.

Als Abdeckung ist eine transparente Weichplastikhaube 72 vorgesehen, die mit einem innenliegenden Ringwulst 74 in die Ringnut 20 eingreift.

Die Wirkungsweise des beschriebenen Grenzwertanzeigers entspricht im übrigen der bekannter Konstruktionen. Überschreitet der Druck an der Schrägbohrung 42 einen bestimmten Wert gegenüber dem Druck unter dem Kolben, so wird der Kolben 28 gegen die Kraft der Feder 46 verschoben. Übersteigt bei einer solchen Verschiebung die Kraft der Feder 66 die zwischen den beiden Permanentmagneten wirksamen anziehenden Magnetkräfte, bewegt die Feder 66 den Anzeigekolben 52 in die Signalstellung.

Die durch die Schrägbohrung 42 in den Ringraum 40 eintretende Druckflüssigkeit wird einem Raum vor dem Filterkörper entnommen und ist somit ungefiltert. Aus diesem Grunde ist es wichtig, daß die Schrägbohrung in den Ringraum mündet und auch bei maximal verstelltem Kolben zumindest noch von dem Kolbensteg 34 überdeckt wird und niemals direkt mit dem oberen Kolbenraum 35 in Verbindung tritt, da dies zu Ablagerungen insbesondere von eisenhaltigen Verunreinigungen am Magneten 32 führen kann. Der relativ enge Spalt zwischen den Durchmessern des Kolbens 28 und der Gehäusebohrung 22, der als Drosselstrecke ausgebildet ist, wirkt gleichzeitig als Spaltfilter einer derartigen Verschmutzung entgegen.

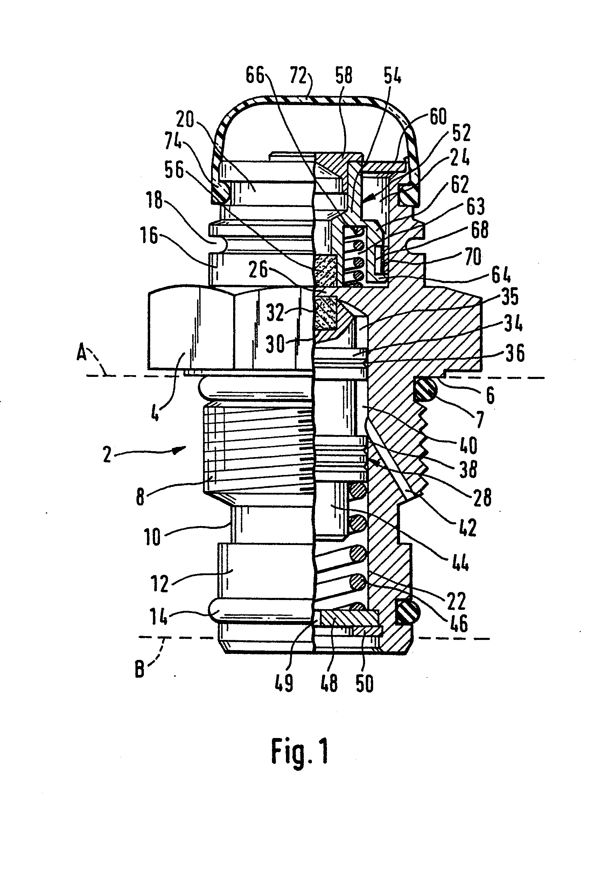

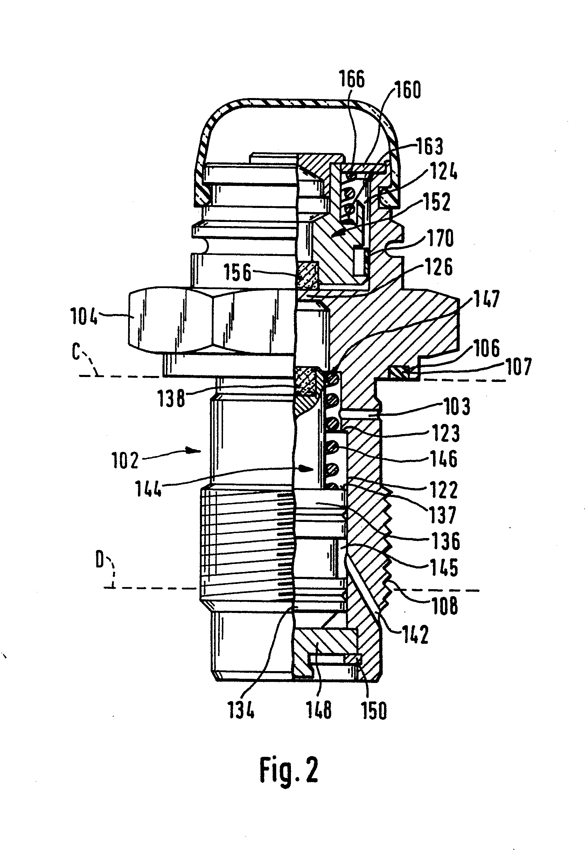

Die in Fig. 2 dargestellte Ausführungsform eines Differenzdruck-Grenzwertschalters unterscheidet sich von der oben beschriebenen Ausführungsform nach Fig. 1 dadurch, daß dieser für die Verwendung in einem Filtergehäuse konzipiert ist, in dem der Grenzwertschalter so angeordnet ist, daß er einen im wesentlichen drucklosen Raum durchdringt, der sich in der Darstellung nach Fig. 2 zwischen den gestrichelten Linien C und D befindet. Dies kann beispielsweise die Auslaßleitung des Filtergehäuses sein. Unterhalb der gestrichelten Linie D befindet sich der Raum höheren Drucks. Durch diese gegenüber der Ausführungsform nach Fig. 1 umgekehrten Druckverhältnisse ergeben sich die im nachstehenden zu beschreibenden Abweichungen des Grenzwertanzeigers in der Ausführungsform nach Fig. 2 gegenüber der nach Fig. 1. Auf Merkmale, die mit denen nach Fig. 1 übereinstimmen, wird nicht nochmals gesondert eingegangen.

Das Gehäuse 102, das wiederum als patronenähnliches Schraubgehäuse ausgebildet ist, ist im Abstand unterhalb der Schlüsselangriffsflächen 104 mit einer Nut 106 versehen, in der sich ein Dichtring 107 befindet. Im Abstand davon befindet sich ein Außen gewinde 108, das hier die Abdichtung zwischen den beiden Räumen unterschiedlichen Drucks unterhalb und oberhalb der gestrichelten Linie D bewirkt. Es können selbstverständlich auch hier zusätzlich Dichtungen vorgesehen sein. In dem Gehäuse 102 sind wiederum zwei jeweils von den Gehäuseenden ausgehende axiale Sackbohrungen 122, 124 vorgesehen, die durch einen Boden 126 voneinander getrennt sind.

In der Sackbohrung 122 ist der Betätigungskolben 144 geführt, der an seinem dem Boden 126 zugewandten Ende einen Permanentmagneten 138 trägt. Der Betätigungskolben ist wiederum mit einem ersten kolbenartigen Führungselement 134 und einem zweiten kolbenartigen Führungselement 136 versehen, zwischen denen sich ein Ringraum 145 befindet. Der Betätigungskolben 144 ist durch eine Druckfeder 146 vorgespannt, und zwar hier in der Richtung vom Boden 126 weg. Die Feder stützt sich dabei gegen eine Schulter 147, die in der Sackbohrung 122 ausgebildet ist. In der Wandung des Gehäuses 102 befindet sich hier eine Schrägbohrung 142, die vom unteren Ende des Gehäuses ausgeht und in den Ringraum 145 mündet. Das Führungselement 134 ist hier wiederum mit einer Drosselstrecke versehen, durch die Drucköl vor die untere Stirnseite des Betätigungskolbens gelangt. Der Betätigungskolben ist gegen die Kraft der Druckfeder 146 gegen einen in das Gehäuse eingesetzten Boden 148 abgestützt, der auf einem Sprengring 150 aufliegt. Die Bohrung 142 kann entfallen, wenn der Boden mit einem als Drosselstrecke ausgebildeten Durchlaß versehen wird, über den Drucköl direkt vor die untere Stirnseite des Betätigungskolbens gelangt. In diesem Fall braucht das Führungselement 134 nicht mit einer Drosselstrecke ausgebildet zu sein und auch der Ringraum 145 kann entfallen.

Der Ringkolben 154, der in der Sackbohrung 124 und im Ringdeckel 160 geführt ist, entspricht grundsätzlich dem Ringkolben nach Fig. 1. Abweichend ist nach Fig. 2 die Druckfeder 166 zwischen einer Schulter am Ringkolben 154 und dem Ringdeckel 160 angeordnet, vorzugsweise in einer nach oben offenen Ringnut 163, deren äußere Wandung einen mit dem Ringdeckel 160 zusammenwirkenden Anschlag zur Begrenzung der Auswärtsbewegung des Anzeigekolbens 154 bildet. Durch die Druckfeder 166 ist somit der Ringkolben in Richtung auf den Boden 126 vorgespannt. Der am unteren Ende des Ringkolbens 154 angeordnete Permanentmagnet 156 und der Permanentmagnet 138 am Betätigungskolben 144 haben entgegengesetzte Polarität. Mit steigendem Druck in dem Raum unterhalb der gestrichelten Linie D wird der Betätigungskolben 144 gegen die Kraft der Feder 146 nach oben in Richtung auf den Boden 126 verschoben. Da die Permanentmagnete entgegengesetzte Polarität haben, sie sich also abstoßen, wird der Anzeigekolben 154 gegen die Kraft der Feder 166 nach oben in die Anzeigestellung verschoben, sobald die Magnetkräfte die Federkraft übersteigen.

Das in der Sackbohrung 122 oberhalb des Führungselementes 136 des Betätigungskolbens 144 befindliche Öl wird beim Verschieben des Betätigungskolbens über eine Bohrung 103 im Gehäuse 102 in den Raum niedrigen Druckes zwischen den gestrichelten Linien C und D ausgeschoben.

Die Sackbohrung enthält eine Stufe 123, in der die obere Begrenzung 137 des Führungssteges 136 anschlägt, wenn der Kolben 144 einen Maximalweg zurückgelegt hat. In diesem Zustand ist der Magnet 138 noch um einem kleinen Sicherheitsabstand vom Boden 126 entfernt. Dies ist für den Fall eines extrem hohen Differenzdruckes erforderlich, da der Differenzdruck über den Querschnitt des Führungselementes 134 wirkt und eine Kraft entwickeln kann, durch die wesentlich kleinere Flächen Flächen des Magneten 138 bzw. der Boden 126 überlastet werden kann. Der Differenzdruck kann bei sehr stark verschmutztem Filter bis zum Betriebsdruck des Hydrauliksystems ansteigen, in dem das Filter angeordnet ist, das mit dem beschriebenen Grenzwertanzeiger ausgerüstet ist.

Der Ringkolben ist vorzugsweise auch bei der Ausführungsform nach Fig. 2 auf seinem Umfang mit einem Bimetallring 170 als temperaturabhängige Arretierung versehen.

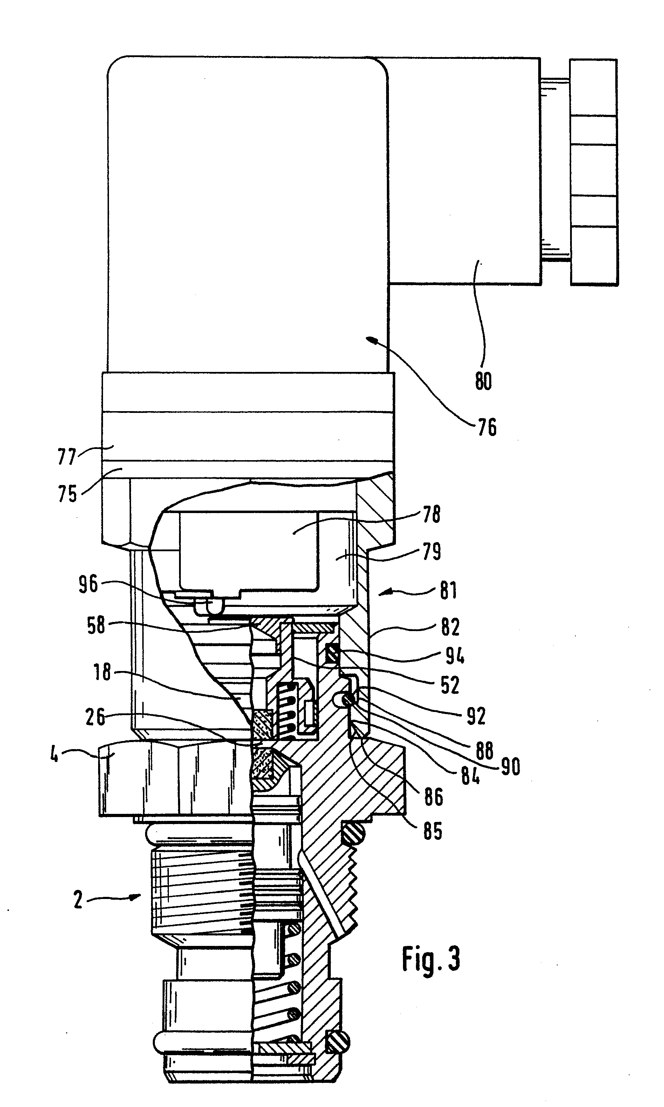

Bei der Ausführungsform nach Fig. 3 entspricht die Ausführung des Grenzwertanzeigers der nach Fig. 1. Es sind daher hier nur für die wesentlichen Teile die Bezugszeichen eingetragen, die auch in Fig. 1 verwendet worden sind.

Das Schraubgehäuse 2 des Grenzwertgebers ist hier um ein Schaltergehäuse 81 erweitert, auf dessen oberer Stirnfläche ein Steckersockel 77 aufgeschraubt und abgedichtet (Flachdichtung 75) ist. Auf dem Steckersockel ist ein Anschlußgehäuse 76 mit beispielsweise seitlichem Kabelabgang 80 aufgesteckt und gesichert. Auf der Unterseite des Steckersockels, der mit in das Anschlußgehäuse vorstehenden Flachsteckerkontakten versehen sein kann, ist ein elektrischer Schalter 78 befestigt, der somit in den Hohlraum 79 des Schaltergehäuses 81 ragt.

Das Schaltergehäuse 81 weist einen rohrförmigen Ansatz 82 auf, mit dem der obere Ansatz 16 des Schraubgehäuses 2 übergriffen wird. Der Ansatz 82 hat an seinem äußeren Ende einen Abschnitt 84 mit einem Durchmesser entsprechend dem Durchmesser des Abschnittes 16 des Gehäuses 2 zwischen der Ringnut 18 und der angrenzenden Stirnseite 86 des Schlüsselangriffs 4. Gegenüber der Nut 18 ist auf der Innenseite des Ansatzes 82 eine Ringnut 88 vorgesehen. Die dem Ende des Ansatzes 82 zugewandte Schulter 90 der Ringnut 88 ist leicht abgeschrägt. In der Nut 18 befindet sich ein Sprengring 92 mit einer radial nach außen gerichteten Kraft. Nach dem Aufstecken des Schaltergehäuses auf das Schraubgehäuse findet der Federweg des Sprengringes seine Begrenzung zwischen der schräg ansteigenden Schulter 90 und der gegenüberliegenden Kante der Nut 18. Somit ist das Schaltergehäuse axial spielfrei auf dem Schraubgehäuse 2 drehbar. Am Ende des Ansatzes befindet sich innen eine schräge Schulter 85, mit der beim Aufsetzen des Schaltergehäuses auf das Gehäuse 2 der Sprengring radial zusammengedrückt wird.

In der Nut 20 am Gehäuse 2 ist hier ein O-Ring 94 zur Abdichtung des Schalterraumes 79 eingesetzt. Zudem erzeugt dieser O-Ring zusätzlich zur Reibkraft des Sprengringes eine Friktion, die eine kraftschlüssige Arretierung der für die günstigste Richtung des Kabelabganges eingestellten Winkellage des Anschlußgehäuses gewährleistet.

Der in dem Schaltergehäuse 81 angeordnete Schalter 78 ist hier ein Mikroschalter, der in üblicher Weise einen außermittig liegenden Stößel 96 aufweist, der im Bereich des Randes des Stirndeckels 58 des Anzeigekolbens aufliegt. Wie ohne weiteres ersichtlich, liegt somit der Schalttaster beim Drehen des Schaltergehäuses gegenüber dem Schraubgehäuse 2 in allen Winkelstellungen über dem Stirndeckel 58 des Anzeigekolbens trotz seiner exzentrischen Lage zur gemeinsamen Achse des Schraubgehäuses 2 und des Schaltergehäuses 81.

Zur Minimierung der Bauhöhe des Schaltergehäuses und zur Vereinfachung des elektrischen Anschlusses ist der Mikroschalter unmittelbar an den Lötanschlüssen des Steckersockels befestigt und angeschlossen.

Bei einer Ausführungsform nach Fig. 3 mit durch den Anzeigekolben betätigtem Schalter, über den statt des optischen Signals ein elektrisches Signal abgegeben wird, kann bei Verwendung eines Grenzwertgebers nach Fig. 2 die Feder 166 des Anzeigekolbens entfallen, da der Schaltstößel 96 des Mikroschalters 78 unmittelbar auf dem Stirndeckel 158 des Anzeigekolbens aufliegt. Im Alarmfall hat die Kraft der sich abstoßenden Magnete dann nur die Betätigungskraft des Mikroschalters zu überwinden.

**Ansprüche**

1. Differenzdruck-Grenzwertanzeiger mit einem Schraubgehäuse (2) mit einer ersten axialen Sackbohrung (22), in der ein mit dem Differenzdruck beaufschlagter Betätigungskolben (28) gelagert ist, an dem eine Druckfeder (46) anliegt, die der Beaufschlagung durch den hohen Druck entgegenwirkend angeordnet ist, mit einer vom gegenüberliegenden Ende des Gehäuses ausgehenden zweiten Sackbohrung (24), die mit der ersten Sackbohrung (22) koaxial angeordnet ist und die mit dieser einen gemeinsamen Boden (26) geringer Dicke aufweist, mit einem in der zweiten Sackbohrung axial geführten Anzeigekolben (52), der mit einem Anzeigeelement in einem die zweite Sackbohrung (24) abschließenden Ringdeckel (60) geführt ist und der an seinem dem Boden zugewandten Ende einen Permanentmagneten (56) trägt, der mit einem Permanentmagneten (32) zusammenwirkt, der an dem dem Boden (26) zugewandten Ende des Betätigungskolbens (28) angeordnet ist, und mit einer Feder (66), mit der der Anzeigekolben (52) entgegen der Magnetkraft zwischen den beiden Permanentmagneten (32,56) vorgespannt ist, dadurch gekennzeichnet, daß der Anzeigekolben (52) als Ringkolben mit einem am äußeren Ende eingesetzten Stirndeckel (58) ausgebildet ist und im Anstand vom äußeren Ende einen Kragen (62) aufweist, mit dem der Anzeigekolben (52) in der zweiten Sackbohrung (24) geführt ist.

2. Differenzdruck-Grenzwertanzeiger nach Anspruch 1, dadurch gekennzeichnet, daß der Durchmesser des äußeren Endes des Stirndeckels (58) geringfügig größer ist als der Durchmesser des äußeren Endes (54) des Ringkolbens (52), mit dem der Ringkolben in dem Ringdeckel (60) geführt ist.

3. Differenzdruck-Grenzwertanzeiger nach Anspruch 1 oder 2, dadurch gekennzeichnet, daß in der Verbindung, die von außen zu dem mit hohem Druck beaufschlagten Ende des Betätigungskolbens (28) führt, eine Drosselstrecke vorgesehen ist.

4. Differenzdruck-Grenzwertanzeiger nach einem der vorhergehenden Ansprüche, dadurch gekennzeichnet, daß der Betätigungskolben (28) zwei axial im Abstand angeordnete kolbenartige Führungselemente (34,38) aufweist, daß die Verbindungsleitung (42) zu dem Raum mit hohem Druck in einen Ringraum (40) mündet, der zwischen den beiden Führungselementen gebildet ist und daß das Führungselement, das dem zum Verstellen des Betätigungskolbens beaufschlagten Ende des Betätigungskolbens zugewandt ist, mit einer Drosselstrecke versehen ist.

5. Differenzdruck-Grenzwertanzeiger nach einem der vorhergehenden Ansprüche, dadurch gekennzeichnet, daß die Permanentmagnete (32,56) gleichgerichtete Polarität haben und daß vom inneren Ende des Ringkolbens ausgehend eine Ringnut (63) zur Aufnahme der Vorspannfeder (66) vorgesehen ist.

6. Differenzdruck-Grenzwertanzeiger nach einem der Ansprüche 1 bis 4, dadurch gekennzeichnet, daß die Permanentmagnete entgegengesetzte Polarität haben und daß die Vorspannfeder zwischen einer Schulter am Ringkolben und dem Ringdeckel (160) angeordnet ist.

7. Differenzdruck-Grenzwertanzeiger nach einem der vorhergehenden Ansprüche mit einer durch ein Bimetallelement gebildeten Sperre für den Anzeigekolben, dadurch gekennzeichnet, daß die Sperre als geschlitzer Bimetallring (70,170) mit rechteckigem Querschnitt ausgebildet ist, der sich bei Erwärmung zusammenzieht, daß der Anzeigekolben (52,154) auf dem Umfang seines Kragens (62) mit einer flachen Ringnut (68) zur axial geführten Aufnahme des Bimetallringes versehen ist, und daß der Bimetallring so ausgebildet ist, daß er im kalten Zustand expandiert mit der zylindrischen Wandung der zweiten Sackbohrung (24,124) zusammenwirkt.

8. Differenzdruck-Grenzwertanzeiger nach Anspruch 1, dadurch gekennzeichnet, daß das Gehäuse (21,102) im Bereich der zweiten Sackbohrung (24,124) außen an das Gehäuseende angrenzend mit einer ersten Ringnut (20) und in weiterem Abstand vom Gehäuseende mit einer Ringnut (18) zur Aufnahme eines Sprengringes (92) versehen ist.

9. Differenzdruck-Grenzwertanzeiger nach Anspruch 8, dadurch gekennzeichnet, daß eine gewölbte Abdeckkappe aus einem durchsichtigen Weichplastikmaterial vorgesehen ist, die mit einer inneren Ringwulst (74) versehen ist, mit der sie in die erste Ringnut (20) eingreift.

10. Differenzdruck-Grenzwertanzeiger nach Anspruch 8, gekennzeichnet durch ein Kupplungsteil (82) mit einer Kupplungsbohrung zum Aufstecken auf den Abschnitt des Gehäuses (2) mit der zweiten Sackbohrung, mit einer Schrägschulter (85) am Ende der Kupplungsbohrung und einer Ringnut (88) zur Aufnahme des als Sprengring (92) ausgebildeten Kuppelelementes, mit einem am anderen Ende ausgebildeten Schaltergehäuse (81) mit einem Flanschteil zur Befestigung des Steckersockels einer Normsteckerverbindung, auf dessen den Steckern abgewandten Innenseite ein mechanischer Mikroschalter so angeordnet ist, daß dessen Betätigungsstößel mit dem Stirndeckel des Anzeigekolbens betätigbar ist.

0 273 358

Fig.1

**Fig. 2**

0 273 358

Fig. 3